# EUROPEAN PATENT SPECIFICATION

(11) **EP 4 261 049 B1**
(45) Date of publication and mention of the grant of the patent: **26.03.2025**
(21) Application number: 23167216.3
(22) Date of filing: 07.04.2023
(51) Int. Cl.: B60C 1/00, C08L 9/00

(54) **RUBBER COMPOSITION AND A TIRE**
KAUTSCHUKZUSAMMENSETZUNG UND REIFEN
COMPOSITION DE CAOUTCHOUC ET PNEUMATIQUE

(30) Priority: 12.04.2022 US 202263362835 P; 13.02.2023 US 202318167941
(43) Date of publication of application: 18.10.2023
(73) Proprietor: The Goodyear Tire & Rubber Company, Akron, OH 44316 (US)
(72) Inventor: ENGELDINGER, Eric, 8508 Rédange/Attert (LU); WEYDERT, Marc, 8064 Bertrange (LU)
(74) Representative: Kutsch, Bernd

(56) References cited:
- EP-A1- 3 792 077
- EP-B1- 3 181 630
- EP-B1- 3 181 631
- EP-B1- 3 351 563
- EP-B1- 3 424 961
- WO-A2-2021/102202
- US-A1- 2015 148 448
- US-A1- 2017 259 620
- US-A1- 2023 126 418
- US-B1- 6 313 211
- US-B2- 10 144 819
- US-B2- 11 414 441
- US-B2- 7 285 584
- US-B2- 9 550 893

## Description

### Field of the Invention

This invention relates to a sulfur vulcanizable or a vulcanized elastomer composition, in particular for rubber components, such as for tires. Moreover, the present invention is directed to a rubber component for a tire or a tire comprising such an elastomer composition.

### Background of the Invention

In view of a continuing demand for improved tire performance, new material combinations are constantly being evaluated and tested by tire manufacturers. In particular, in many tire tread elastomer compositions, it is difficult to break the hysteresis/tear tradeoff. While it may be possible to obtain good tensile and/or tear properties and to maintain rolling resistance indicators at a high level in some approaches, it has been found difficult to obtain at the same time desired stiffness properties. There is thus a need to provide new elastomer compositions for tires which provide good stiffness, tear and rolling resistance properties.

### Summary of the Invention

The invention relates to an elastomer composition in accordance with claim 1 and to a tire in accordance with claim 15.

Dependent claims refer to preferred embodiments of the invention.

A first object of the present invention is to provide an elastomer composition having desirable rolling resistance and/or hysteresis properties.

Another object of the present invention is to provide an elastomer composition having good tensile properties.

Another object of the present invention is to provide an elastomer composition with sufficient or advanced stiffness.

Yet another object of the present invention is to provide an elastomer composition exhibiting a good balance of hysteresis properties, tensile properties and compound stiffness.

In a first aspect of the invention, the present invention is directed to a sulfur vulcanizable (or vulcanized) elastomer composition (in other words rubber composition) comprising 50 phr to 100 phr of at least one partially saturated elastomer comprising repeat units, wherein at most 15% of all repeat units of the partially saturated elastomer comprise a double bond. Moreover, the elastomer composition comprises 0 phr to 50 phr of at least one diene based elastomer and 40 phr to 200 phr of at least one filler, wherein the filler predominantly comprises silanized silica, preferably pre-silanized silica. In other words, the majority (by weight) of the filler is the silianized or pre-silanized silica.

Surprisingly, the inventors have found that the combination of the partially unsaturated elastomer having a limited number of double bonds with a silanized or pre-silanized silica results in an unexpected increase in compound stiffness. Typically, the contrary has been observed when employing such silica in combination with conventional elastomers, resulting in a limited stiffness. However, in combination with the unsaturated polymer having a limited number of double bonds, unexpectedly an opposite effect has been found by the inventors.

In one embodiment, the partially saturated elastomer has a glass transition temperature within a range of -20°C to -65°C. Such a Tg range is for instance suitable for the application of the polymer in the rubber composition for passenger car and truck tread applications.

In another embodiment, the partially saturated elastomer has a weight average molecular weight Mw of 150,000 g/mol to 900,000 g/mol, preferably of 200,000 g/mol to 500,000 g/mol. Mw is determined with gel permeation chromatography (GPC) according to ASTM 5296-11 using polystyrene calibration standards, or equivalent. Such a molecular weight range helps to obtain a suitable balance between processability and hysteresis properties.

In another embodiment, the partially saturated elastomer has a glass transition temperature within a range of -20°C to -45°C, preferably of -25°C to -40°C.

In still another embodiment, the partially saturated elastomer has a glass transition temperature within a range of -45°C to -65°C, preferably of -45°C to -60°C.

In yet another embodiment, at most 11%, preferably at most 8%, of all repeat units have a double bond and/or at least 4% of the repeat units have a double bond. In particular, it may be less desirable that the elastomer is fully free of double bonds or completely hydrogenated. In particular, some of the double bonds (typically originating from a double bond of a monomer unit) shall remain in place for the purpose of cross linking, or in other words, the sulfur vulcanization. When counting double bonds herein, the bonds in an aromatic structure or group, such as of a styrene repeat unit, are not counted as double bond. However, a styrene unit is still counted as a repeat unit for the determination of the total number of repeat units in a polymer or elastomer.

In yet another embodiment, the partially saturated elastomer comprises repeat units formed by residues of monomers selected from ethylene, propylene, butadiene, isoprene, and styrene. These monomers are preferably used to make or obtain the partially saturated elastomer. One or more of the residues may be hydrogenated. In other words, double bonds of one or more of the residues may be hydrogenated.

In yet another embodiment, the partially saturated elastomer is a hydrogenated styrene-butadiene rubber, preferably a hydrogenated solution-polymerized styrene-butadiene rubber (SSBR). Hydrogenated SSBR and its manufacturing as such is known to the person skilled in the art and is for instance described in United States Patent Application Publications US 2018201065 A1, US 2018251576 A1 and US 20190062539 A1.

In still another embodiment, the partially saturated elastomer is a styrene-butadiene rubber, such as a partially saturated solution-polymerized styrene butadiene rubber, having one or more of:
i) less than 5% of non-hydrogenated vinyl groups, based on the total number of vinyl groups of the hydrogenated styrene butadiene rubber;
ii) less than 20%, preferably less than 10%, or preferably less than 5%, of non-hydrogenated double bonds in cis-1,4 and trans-1,4 butadiene repeat units, based on the total number of cis-1,4 and trans-1,4 butadiene repeat units;
iii) from 80% (preferably from 85% or from 90%) to 99%, or from 90% to 98% of hydrogenated double bonds; and
iv) a bound styrene content ranging from 5% to 40%, preferably from 20% to 35%, and a butadiene content ranging from 50% to 95%, or from 50% to 80%, by weight.

In another preferred embodiment, the hydrogenated styrene-butadiene rubber has from 90% to 98% of hydrogenated double bonds. In other words, there are still double bonds remaining which have not been hydrogenated. As known to the person skilled in the art, the number of double bonds can be determined by NMR. This applies also to partially saturated elastomers which are not styrene-butadiene rubbers.

In yet another embodiment, the bound styrene content of the styrene-butadiene rubber will be within the range of 10% to 40% and its bound butadiene content will be within the range of 60% to 90%, by weight, as determined by NMR. The styrene-butadiene rubber will typically have a bound styrene content which is within the range of 20% to 35% and a bound butadiene content which is within the range of 65% to 80%.

In still another embodiment, the silica has a BET surface area smaller than 150 g/m², preferably smaller than 120 g/m², even more preferably at most 100 g/m².

In still another embodiment, the silica has a BET surface area within a range of 50 g/m² to 100 g/m². A low surface area may help herein to provide a better silica dispersion which helps to obtain low hysteresis.

Such a BET surface area is measured herein by Nitrogen adsorption according to ASTM D6556 or equivalent. The BET method of measuring surface area is also described, for example, in the Journal of the American Chemical Society, Volume 60.

In still another embodiment, the silanized or pre-silanized (and preferably precipitated) silica has a CTAB adsorption surface area of between 130 m²/g and 210 m²/g, optionally between 130 m²/g and 150 m²/g. The CTAB (cetyl trimethyl ammonium bromide) method for determination of the silica surface area according to ASTM D6845 is known to the person skilled in the art.

In another embodiment, the silanized or pre-silanized (and optionally precipitated) silica utilized is hydrophobated prior to its addition to the elastomer composition by treatment with at least one silane. Suitable silanes include but are not limited to alkylsilanes, alkoxysilanes, organoalkoxysilyl polysulfides and organomercaptoalkoxysilanes.

In still another embodiment, said pre-silanized silica is a silica which is pre-reacted with a sulfur-containing silane.

In another embodiment, the pre-silanized silica may be pre-treated with a silica coupling agent comprising, for example, an alkoxyorganomercaptoalkoxysilane or a combination of alkoxysilane and organomercaptoalkoxysilane prior to blending the pre-silanized silica with the elastomer instead of reacting the silica with the silica coupling agent in situ within the elastomer composition. For example, see United States Patent 7,214,731, showing further details of making such pre-silanized silica.

In another embodiment, said silanized or pre-silanized silica is an (optionally precipitated) silica pre-reacted with a silica coupler comprised of bis(3-triethoxysilylpropyl)polysulfide containing an average of from 1 to 5 connecting sulfur atoms (preferably 2 to 4) in its polysulfidic bridge or an alkoxyorganomercaptosilane. The silane improves compatibility with the rubber material, dispersion or rubber matrix and/or supports the curing process.

The amount of mercapto groups on the surface of the silica may be in the range of between 0.1 and 1 weight percent, alternatively 0.4 to 1 weight percent or 0.4 to 0.6 weight percent, wherein 100% is the (whole) weight of the silica sample. Such a determination of mercapto groups is carried out by titration.

In addition to mercapto groups coupled to the silica, the silica may comprise a compatibilizer which is typically a (hydro-)carbon chain material having multiple carbon atoms (for instance at least 4 carbon atoms) along its chain. Such a compatibilizer may facilitate the mixing of the composition. In an example, the weight % of carbon surface load / functionalization is between 2 and 10, or alternatively between 3 and 8. Again 100% is the whole weight of the silica sample herein.

The silanized or pre-silanized silica may optionally be treated with a silica dispersing aid. Such silica dispersing aids may include glycols, such as fatty acids, diethylene glycols, polyethylene glycols, fatty acid esters of hydrogenated or non-hydrogenated C₅ or C₆ sugars, and polyoxyethylene derivatives of fatty acid esters of hydrogenated or non-hydrogenated C₅ or C₆ sugars. Exemplary fatty acids include stearic acid, palmitic acid and oleic acid. Exemplary fatty acid esters of hydrogenated and non-hydrogenated C₅ and C₆ sugars (e.g., sorbose, mannose, and arabinose) include, but are not limited to, the sorbitan oleates, such as sorbitan monooleate, dioleate, trioleate and sesquioleate, as well as sorbitan esters of laurate, palmitate and stearate fatty acids. Exemplary polyoxyethylene derivatives of fatty acid esters of hydrogenated and non-hydrogenated C₅ and C₆ sugars include, but are not limited to, polysorbates and polyoxyethylene sorbitan esters, which are analogous to the fatty acid esters of hydrogenated and non-hydrogenated sugars noted above except that ethylene oxide groups are placed on each of the hydroxyl groups.

The optional silica dispersing aids, if used, are present in an amount ranging from about 0.1% to about 25% by weight based on the weight of the silica, with about 0.5% to about 20% by weight being suitable, and about 1% to about 15% by weight based on the weight of the silica also being suitable.

In another embodiment, the pre-silanized silica is pre-hydrophobated by treating silica in an aqueous colloidal form thereof with both an organomercaptosilane and an alkylsilane in a weight ratio of said organomercaptosilane to said alkylsilane in a range of from 10/90 to 90/10; wherein said alkylsilane is of the general Formula (I):

Xₙ-Si-R₄₋ₙ (I),

wherein R is an alkyl radical having from 1 to 18 carbon atoms, preferably from 1 to 8 carbon atoms, such as methyl, ethyl, isopropyl, n-butyl and octadecyl radicals, n is a numeral from 1 to 3 and X is a radical selected from halogens, namely chlorine or bromine, preferably a chlorine radical, and alkoxy radicals, preferably an alkoxy radical as (R¹O)-, wherein R¹ is an alkyl radical having from 1 to 3 carbon atoms, such as, methyl, ethyl and isopropyl radicals, preferably from methyl and ethyl radicals, and where said organomercaptosilane is of the general formula (II):

(X)ₙ(R²O)₃₋ₙ-Si-R³-SH (II),

wherein X is a radical selected from halogens, such as chlorine or bromine, preferably a chlorine radical, and alkyl radicals having from 1 to 16 carbon atoms, preferably selected from methyl, ethyl, n-propyl, and n-butyl radicals; wherein R² is an alkyl radical having from 1 to 16 carbon atom, preferably from 1 to 4 carbon atoms, preferably selected from methyl and ethyl radicals and R³ is an alkylene radical having from 1 to 16 carbon atoms, preferably from 1 to 4 carbon atoms, preferably a propylene radical; wherein n represents an integer from 0 to 3 with n preferably representing zero.

Representative alkylsilanes of Formula (I) are, for example, trichloro methyl silane, dichloro dimethyl silane, chloro trimethyl silane, trimethoxy methyl silane, dimethoxy dimethyl silane, methoxy trimethyl silane, trimethoxy propyl silane, trimethoxy octyl silane, trimethoxy hexadecyl silane, dimethoxy dipropyl silane, triethoxy methyl silane, triethoxy propyl silane, triethoxy octyl silane, and diethoxy dimethyl silane.

Representative organomercaptosilanes of Formula (II) are, for example, triethoxy mercaptopropyl silane, trimethoxy mercaptopropyl silane, methyl dimethoxy mercaptopropyl silane, methyl diethoxy mercaptopropyl silane, dimethyl methoxy mercaptopropyl silane, triethoxy mercaptoethyl silane, and tripropoxy mercaptopropyl silane.

Some examples of pre-silanized silicas which are suitable for use in the practice of this invention include, but are not limited to, Ciptane^{®} 255 LD and Ciptane^{®} LP (PPG Industries) silicas that have been pre-treated with a mercaptosilane, and Coupsil^{®} 8113 (Degussa) that is the product of the reaction between organosilane Bis(triethoxysilylpropyl) polysulfide (Si69) and Ultrasil^{®} VN3 silica, and Coupsil^{®} 6508, Agilon^{®} 400 silica from PPG Industries, Agilon^{®} 454 silica from PPG Industries, and Agilon^{®} 458 silica from PPG Industries.

In an embodiment, the elastomer composition is exclusive of non-pre-silanized silica or comprises less than 10 phr, preferably less than 5 phr of non-pre-silanized silica.

In general, the pre-silanized silica is not necessarily pre-silanized precipitated silica herein but is preferably pre-silanized precipitated silica.

In an embodiment, the elastomer composition may also include (non-pre-silanized) silica which is optionally precipitated silica. Such conventional silicas might be characterized, for example, by having a BET surface area as measured using nitrogen gas. In one embodiment, the BET surface area may be in the range of 40 to 600 square meters per gram. In another embodiment, the BET surface area may be in a range of 80 to 300 square meters per gram. The conventional silica may also be characterized by having a dibutylphthalate (DBP) absorption value in a range of 100 to 400, alternatively 150 to 300. A conventional silica might be expected to have an average ultimate particle size, for example, in the range of 0.01 to 0.05 micron as determined by the electron microscope, although the silica particles may be even smaller, or possibly larger, in size. Various commercially available silicas may be used, such as, only for example herein, and without limitation, silicas commercially available from PPG Industries under the Hi-Sil trademark with designations 210, 315G, EZ160G, etc; silicas available from Solvay, with, for example, designations of Z1165MP and Premium200MP, etc.; and silicas available from Evonik AG with, for example, designations VN2 and Ultrasil 6000GR, 9100GR, etc.

In one embodiment, where the elastomer composition contains added/non-pre-silanized silica (in addition to said pre-silanized silica), said elastomer composition contains added silica coupler (silica coupler added to said elastomer composition), wherein said silica coupler has a moiety reactive with hydroxyl groups (e.g. silanol groups) on said silica and said pre-silanized silica and another different moiety interactive with the elastomers of the elastomer composition. In one embodiment, said silica coupler added to said elastomer composition is comprised of bis(3-triethoxysilylpropyl) polysulfide having an average of from about 2 to about 4 connecting sulfur atoms in its polysulfidic bridge.

Representatives of the aforesaid silica coupler (or in other words silica coupling agent) having a moiety reactive with hydroxyl groups on pre-silanized silica and on silica and another moiety interactive with said elastomers, may be comprised of, for example: (A) bis(3-trialkoxysilylalkyl) polysulfide containing an average in range of from about 2 to about 4, alternatively from about 2 to about 2.6 or from about 3.2 to about 3.8, sulfur atoms in its connecting bridge, or (B) an alkoxyorganomercaptosilane, or (C) their combination. A representative of such bis(3-trialkoxysilylalkyl) polysulfide is comprised of bis(3-triethoxysilylpropyl) polysulfide. As indicated, for the pre-silanized precipitated silica, the silica coupler may be desirably an alkoxyorganomercaptosilane. For the non-pre-silanized silica, the silica coupler may be desirably comprised of the bis(3-triethoxysilylpropyl) polysulfide.

In one embodiment, the elastomer composition may contain a conventional sulfur containing organosilicon compounds or silanes. Examples of suitable sulfur containing organosilicon compounds are of the formula:

Z-Alk-Sₙ-Alk-Z I

in which Z is selected from the group consisting of 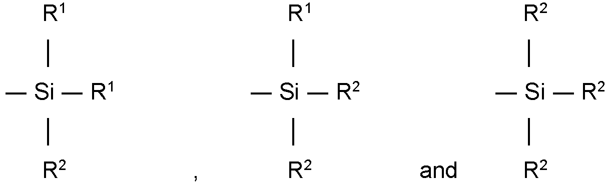 where R¹ is an alkyl group of 1 to 4 carbon atoms, cyclohexyl or phenyl; R² is an alkoxy of 1 to 8 carbon atoms, or cycloalkoxy of 5 to 8 carbon atoms; Alk is a divalent hydrocarbon of 1 to 18 carbon atoms and n is an integer of 2 to 8. In one embodiment, the sulfur containing organosilicon compounds are the 3,3'-bis(trimethoxy or triethoxy silylpropyl) polysulfides. In one embodiment, the sulfur containing organosilicon compounds are 3,3'-bis(triethoxysilylpropyl) disulfide and/or 3,3'-bis(triethoxysilylpropyl) tetrasulfide. Therefore, as to formula I, Z may be 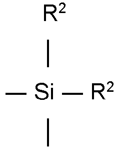 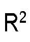 where R² is an alkoxy of 2 to 4 carbon atoms, alternatively 2 carbon atoms; Alk is a divalent hydrocarbon of 2 to 4 carbon atoms, alternatively with 3 carbon atoms; and n is an integer of from 2 to 5, alternatively 2 or 4. In another embodiment, suitable sulfur containing organosilicon compounds include compounds disclosed in United States Patent 6,608,125. In one embodiment, the sulfur containing organosilicon compounds includes 3-(octanoylthio)-1-propyltriethoxysilane, CH₃(CH₂)₆C(=O)-S-CH₂CH₂CH₂Si(OCH₂CH₃)₃, which is available commercially as NXT^{™} from Momentive Performance Materials. In another embodiment, suitable sulfur containing organosilicon compounds include those disclosed in United States Patent Publication No. 2003/0130535. In one embodiment, the sulfur containing organosilicon compound is Si-363 from Degussa. The amount of the sulfur containing organosilicon compound in an elastomer composition may vary depending on the level of other additives that are used. Generally speaking, the amount of the compound may range from 0.5 phr to 20 phr. In one embodiment, the amount will range from 1 phr to 10 phr.

In one embodiment, the elastomer composition is exclusive of a separate silica coupler, i.e., a silica coupler added separately to the rubber composition.

In still another embodiment, said filler comprises at least 50 phr of silica, preferably from 50 phr to 160 phr of silica, wherein the silica is predominantly pre-silanized silica (all by weight).

In still another embodiment, said filler comprises from 45 phr of the pre-silanized silica to 150 phr of the pre-silanized silica. In a preferred embodiment, said filler comprises from 60 phr of the pre-silanized silica to 150 phr of the pre-silanized silica.

In still another embodiment, said filler comprises from 25 phr of the pre-silanized silica to 60 phr of the pre-silanized silica. Such a range is of particular interest for truck tires.

In still another embodiment said filler comprises less than 25 phr of carbon black, preferably less than 10 phr of carbon black, or even more preferably less than 5 phr of carbon black.

In another preferred embodiment, the elastomer composition comprises at most 10 phr of liquid plasticizers, preferably at most 10 phr of oil. Liquid plasticizer means herein a plasticizer which is in a liquid state at 23°C.

In another preferred embodiment, the elastomer composition comprises less than 50 phr of oil, preferably less than 30 phr of oil, more preferably less than 10 phr of oil, or even more preferably less than 7 phr of oil. It may also comprise less than 5 phr of oil or be essentially or completely free of oil.

In still another embodiment, the elastomer composition further comprises from 3 phr to 20 phr (preferably from 5 phr to 15 phr) of a polyoctenamer. Addition of a polyoctenamer helps to further improve tensile properties and also the co-curability to other diene based elastomeric compounds. Moreover, the presence of the polyoctenamer helps to improve rolling resistance indicators in combination with the partially saturated elastomer such as a hydrogenated SSBR.

In another preferred embodiment, the polyoctenamer has one or more of: a glass transition temperature within a range of -50°C to -80°C, determined under ASTM D3418 as mentioned hereinbelow; a weight average molecular weight M_{w} within a range of 80,000 g/mol to 100,000 g/mol, determined by gel permeation chromatography (GPC) using polystyrene calibration standards according to ASTM 5296-11 or equivalent; and a melting point within a range of 45°C to 55°C, measured by DSC in second heating, according to ASTM D3418 or equivalent.

In yet another preferred embodiment, the polyoctenamer has between 65% and 85% of trans double bonds of all double bonds in the polyoctenamer.

In another embodiment, the elastomer composition comprises from 75 phr (preferably 80 phr) to 100 phr of the partially saturated elastomer, and/or from 0 phr to 25 phr (preferably 20 phr) of one or more of polybutadiene rubber, polyisoprene, and natural rubber. In particular, a high amount of the partially saturated elastomer has been found to be most desirable.

In still another embodiment, said polybutadiene rubber has a glass transition temperature within a range of -90°C to -115°C and/or is a (high) cis-polybutadiene rubber having a cis-microstructure content of at least 95%.

In another embodiment, the composition may comprise one or more hydrogenated plasticizers chosen from one or more of hydrogenated liquid plasticizers and hydrogenated hydrocarbon resins. In particular, hydrogenated liquid plasticizers could include hydrogenated oils and/or hydrogenated liquid polymers, preferably hydrogenated liquid diene-based polymers. Such hydrogenated liquid and diene-based polymers have preferably an average molecular weight Mw of less than 50,000 g/mol, wherein Mw is determined with gel permeation chromatography (GPC) using polystyrene calibration standards according to ASTM 5296-11 or equivalent. Liquid diene-based polymers could include liquid styrene-butadiene rubbers, butadiene rubbers, isoprene rubbers, styrene isoprene rubbers, isoprene butadiene rubbers and styrene isoprene butadiene rubbers, or combinations thereof.

In an embodiment, the hydrogenated hydrocarbon resin is selected from fully or partially hydrogenated C9 resins, fully or partially hydrogenated C5 resins, fully or partially hydrogenated alpha methyl styrene resins, fully or partially hydrogenated terpene resins, fully or partially hydrogenated rosin resins, or mixtures thereof. It is also possible that the resin is modified by one or more aliphatic or aromatic groups.

In another embodiment, the hydrogenated hydrocarbon resin is selected from the group of fully or partially hydrogenated (in particular aliphatic) C5 resins, fully or partially hydrogenated cyclopentadiene resins, fully or partially hydrogenated dicyclopentadiene resins, and combinations of those. It is also possible that the resin is modified by one or more aliphatic or aromatic groups. However, the majority of the monomer residues of the resin are preferably partially or fully hydrogenated cyclopentadienes, fully or partially hydrogenated dicyclopentadienes, and combinations of those.

In still another embodiment, the hydrogenated hydrocarbon resin is free of double bonds. Such a highly hydrogenated hydrocarbon resin is even more compatible with the rubber matrix according to the present invention.

In another embodiment, the hydrogenated hydrocarbon resin is a fully or partially hydrogenated cyclopentadiene resin, fully or partially hydrogenated dicyclopentadiene, or a combination thereof.

In another embodiment, the elastomer composition may comprise at least one resin, preferably a hydrocarbon resin, even more preferably a plasticizing hydrocarbon resin (for instance the hydrogenated hydrocarbon resins as described herein above). A resin may be present at a range of 5 phr to 80 phr, preferably 10 phr to 75 phr, or even more preferably 20 phr to 70 phr.

In another embodiment, a glass transition temperature of the resin is within a range of 30°C to 80°C, preferably 40°C to 80°C, or even more preferably within a range of 40°C to 70°C. A glass transition temperature of a resin is determined herein as a peak midpoint by a differential scanning calorimeter (DSC) at a temperature rate of increase of 10°C per minute, according to ASTM D6604 or equivalent.

In another embodiment, the resin has a softening point of at least 95°C as determined according to ASTM E28, or equivalent, which might sometimes be referred to as a ring and ball softening point. Preferably, the softening point is at most 140°C or more preferably at most 120°C, or even more preferably at most 110°C.

In still another embodiment, the resin has a polydispersity index within a range of 1 to 5, preferably 1 to 2, or even more preferably 1.5 to 1.8.

In yet another embodiment, the resin has an average molecular weight Mw within a range of 150 g/mol to 1500 g/mol, preferably 400 g/mol to 1000 g/mol, or more preferably 500 g/mol to 900 g/mol, or even more preferably 600 g/mol to less than 700 g/mol. Mw is determined with gel permeation chromatography (GPC) using polystyrene calibration standards according to ASTM 5296-11 or equivalent.
In still another embodiment, the elastomer composition further comprises at least 0.2 phr of vulcanizing agents, preferably comprising elemental sulfur. For instance, the composition may comprise from 0.4 phr to 15 phr of vulcanizing agents which may comprise, but are not limited to, elemental sulfur or sulfur containing silanes.

In another embodiment, the elastomer composition comprises from 0.3 phr to 3 phr of at least one vulcanization accelerator selected from the dithiocarbamate accelerators and/or thiuram accelerators. Such accelerators are known to be fast accelerators and are herein considered as particularly beneficial in view of the utilization of the limited amounts of double bonds in the elastomer and/or hydrogenated resin. The composition may comprise further accelerators.

In still another embodiment, said vulcanization accelerator is tetrabenzylthiuramdisulfide which has turned out to be a preferred choice in combination with the partially saturated polymer.

In an embodiment, the elastomer composition may include at least one and/or one additional diene-based rubber. Representative synthetic polymers may be the homopolymerization products of butadiene and its homologues and derivatives, for example, methyl butadiene, dimethylbutadiene and pentadiene as well as copolymers such as those formed from butadiene or its homologues or derivatives with other unsaturated monomers. Among the latter may be acetylenes, for example, vinyl acetylene; olefins, for example, isobutylene, which copolymerizes with isoprene to form butyl rubber; vinyl compounds, for example, acrylic acid, acrylonitrile (which polymerize with butadiene to form NBR), methacrylic acid and styrene, the latter compound polymerizing with butadiene to form SBR, as well as vinyl esters and various unsaturated aldehydes, ketones and ethers, e.g. acrolein, methyl isopropenyl ketone and vinylethyl ether. Specific examples of synthetic rubbers include neoprene (polychloroprene), polybutadiene (including cis 1,4-polybutadiene), polyisoprene (including cis 1,4-polyisoprene), butyl rubber, halobutyl rubber such as chlorobutyl rubber or bromobutyl rubber, styrene/isoprene/butadiene rubber, copolymers of 1,3-butadiene or isoprene with monomers such as styrene, acrylonitrile and methyl methacrylate, as well as ethylene/propylene terpolymers, also known as ethylene/propylene/diene monomer (EPDM), and in particular, ethylene/propylene/dicyclopentadiene terpolymers. Additional examples of rubbers which may be used include alkoxy-silyl end functionalized solution polymerized polymers (SBR, PBR, IBR and SIBR), silicon-coupled and tin-coupled star-branched polymers. Preferred rubber or elastomers may be in general natural rubber, synthetic polyisoprene, polybutadiene and SBR including SSBR. One or more of these rubbers may be functionalized, such as for the coupling to silica.

In another embodiment, the composition may comprise at least two diene-based rubbers. For example, a combination of two or more rubbers is preferred such as cis 1,4-polyisoprene rubber (natural or synthetic, although natural is preferred), 3,4-polyisoprene rubber, styrene/isoprene/butadiene rubber, emulsion and solution polymerization derived styrene/butadiene rubbers, cis 1,4-polybutadiene rubbers and emulsion polymerization prepared butadiene/acrylonitrile copolymers. In some embodiments, the partially saturated elastomer may also be a diene-based polymer but it is not necessarily diene-based.

In another embodiment, an emulsion polymerization derived styrene/butadiene (ESBR) might be used having a styrene content of 20 to 35 percent bound styrene or, for some applications, an ESBR having a medium to relatively high bound styrene content, namely a bound styrene content of 30 to 45 percent. By emulsion polymerization prepared ESBR, it may be meant that styrene and 1,3-butadiene are copolymerized as an aqueous emulsion. Such are well known to those skilled in such art. The bound styrene content can vary, for example, from 5 to 50 percent. In one aspect, the ESBR may also contain acrylonitrile to form a terpolymer rubber, as ESBR, in amounts, for example, of 2 to 30 weight percent bound acrylonitrile in the terpolymer. Emulsion polymerization prepared styrene/butadiene/acrylonitrile copolymer rubbers containing 2 to 40 weight percent bound acrylonitrile in the copolymer may also be contemplated as diene-based rubbers.

In another embodiment, solution polymerization prepared SBR (SSBR) may be used. Such an SSBR may for instance have a bound styrene content in a range of 5 to 50 percent, preferably 9 to 36, percent. The SSBR can be conveniently prepared, for example, by anionic polymerization in an inert organic solvent. More specifically, the SSBR can be synthesized by copolymerizing styrene and 1,3-butadiene monomer in a hydrocarbon solvent utilizing an organo lithium compound as the initiator. As noted above, such a rubber may also be functionalized for the coupling to silica.

In one embodiment, a synthetic or natural polyisoprene rubber may be used. Synthetic cis 1,4-polyisoprene and cis 1,4-polyisoprene natural rubber are as such well known to those having skill in the rubber art. In particular, the cis 1,4-content may be at least 90%, optionally at least 95%.

In one embodiment, cis 1,4-polybutadiene rubber (BR or PBD) is used. Suitable polybutadiene rubbers may be prepared, for example, by organic solution polymerization of 1,3-butadiene. The BR may be conveniently characterized, for example, by having at least a 90 percent cis 1,4-content ("high cis" content) and a glass transition temperature Tg in a range of from -95°C to -110°C. Suitable polybutadiene rubbers are available commercially, such as Budene^{®} 1207, Budene^{®} 1208, Budene^{®} 1223, or Budene^{®} 1280 from The Goodyear Tire & Rubber Company. These high cis-1,4-polybutadiene rubbers can for instance be synthesized utilizing nickel catalyst systems which include a mixture of (1) an organonickel compound, (2) an organoaluminum compound, and (3) a fluorine containing compound as described in United States Patent 5,698,643 and United States Patent 5,451,646.

A glass transition temperature, or Tg, of an elastomer or rubber represents the glass transition temperature(s) of the respective elastomer or rubber in its uncured state. A glass transition temperature, or Tg, of an elastomer composition or a rubber composition represents the glass transition temperatures of the respective elastomer composition or rubber composition in its cured state. A Tg is determined as a peak midpoint by a differential scanning calorimeter (DSC) at a temperature rate of increase of 20°C per minute, according to ASTM D3418.

The term "phr" as used herein, and according to conventional practice, refers to "parts by weight of a respective material per 100 parts by weight of rubber, or elastomer". In general, using this convention, an elastomer composition is comprised of 100 parts by weight of rubber/elastomer. The claimed composition may comprise other rubbers / elastomers than explicitly mentioned in the claims, provided that the phr value of the claimed rubbers/elastomers is in accordance with claimed phr ranges and the amount of all rubbers/elastomers in the composition results in total in 100 parts of rubber. In an example, the composition may further comprise from 1 phr to 10 phr, optionally from 1 phr to 5 phr, of one or more additional diene-based rubbers, such as SBR, SSBR, ESBR, PBD/BR, NR and/or synthetic polyisoprene. In another example, the composition may include less than 5, preferably less than 3, phr of an additional diene-based rubber or be also essentially free of such an additional diene-based rubber. The terms "compound" and "composition" may be used herein interchangeably, unless indicated otherwise. The terms "rubber" and "elastomer" may also be used herein interchangeably, unless indicated otherwise.

In an embodiment, the elastomer composition may also include oil, in particular processing oil. Processing oil may be included in the elastomer composition as extending oil typically used to extend elastomers. Processing oil may also be included in the elastomer composition by addition of the oil directly during rubber compounding. The processing oil used may include both extending oil present in the elastomers, and process oil added during compounding. Suitable process oils may include various oils as are known in the art, including aromatic, paraffinic, naphthenic, vegetable oils, and low PCA oils, such as MES, TDAE, SRAE and heavy naphthenic oils. Suitable low PCA oils may include those having a polycyclic aromatic content of less than 3 percent by weight as determined by the IP346 method. Procedures for the IP346 method may be found in Standard Methods for Analysis & Testing of Petroleum and Related Products and British Standard 2000 Parts, 2003, 62nd edition, published by the Institute of Petroleum, United Kingdom.

In an embodiment, the elastomer composition may include also carbon black as one of the filler materials. Preferred amounts in this application range from 0.5 phr to 25 phr, preferably from 0.5 phr to 10 phr or from 0.5 phr to 5 phr. Representative examples of such carbon blacks include N110, N121, N134, N220, N231, N234, N242, N293, N299, N315, N326, N330, N332, N339, N343, N347, N351, N358, N375, N539, N550, N582, N630, N642, N650, N683, N754, N762, N765, N774, N787, N907, N908, N990 and N991 grades. These carbon blacks have iodine absorptions ranging from 9 g/kg to 145 g/kg and a DBP number ranging from 34 cm³/100 g to 150 cm³/100 g.

In another embodiment, other fillers may be used in the elastomer composition including, but not limited to, particulate fillers including ultra-high molecular weight polyethylene (UHMWPE), crosslinked particulate polymer gels including but not limited to those disclosed in United States Patent No. 6,242,534, United States Patent No. 6,207,757, United States Patent No. 6,133,364, United States Patent No. 6,372,857, United States Patent No. 5,395,891 or United States Patent No. 6,127,488, and a plasticized starch composite filler including but not limited to that disclosed in United States Patent No. 5,672,639. Such other fillers may be used in an amount ranging from 1 phr to 10 phr.

It is readily understood by those having skill in the art that the elastomer composition may be compounded by methods generally known in the rubber compounding art, such as mixing the various sulfur-vulcanizable constituent rubbers with various commonly used additive materials such as, for example, sulfur donors, curing aids, such as activators and retarders, and processing additives, such as oils, resins including tackifying resins and plasticizers, fillers, pigments, fatty acid, zinc oxide, waxes, antioxidants and antiozonants and peptizing agents. As known to those skilled in the art, depending on the intended use of the sulfur vulcanizable and sulfur-vulcanized material (rubbers), the additives mentioned above are selected and commonly used in conventional amounts. Representative examples of sulfur donors include elemental sulfur (free sulfur), an amine disulfide, polymeric polysulfide and sulfur olefin adducts. In one embodiment, the sulfur-vulcanizing agent is elemental sulfur. The sulfur-vulcanizing agent may for instance be used in an amount ranging from 0.5 phr to 8 phr, alternatively within a range of from 1.5 phr to 6 phr. Typical amounts of tackifier resins, if used, comprise for example 0.5 phr to 10 phr, usually 1 phr to 5 phr. Typical amounts of processing aids, if used, comprise for example 1 phr to 50 phr (this may comprise in particular oil). Typical amounts of antioxidants, if used, may for example comprise 1 phr to 5 phr. Representative antioxidants may be, for example, diphenyl-p-phenylenediamine and others, such as, for example, those disclosed in The Vanderbilt Rubber Handbook (1978), Pages 344 through 346. Typical amounts of antiozonants, if used, may for instance comprise 1 phr to 5 phr. Typical amounts of fatty acids, if used, which can include stearic acid, may for instance comprise 0.5 phr to 3 phr. Typical amounts of waxes, if used, may for example comprise 1 phr to 5 phr. Often microcrystalline waxes are used. Typical amounts of peptizers, if used, may for instance comprise 0.1 phr to 1 phr. Typical peptizers may be, for example, pentachlorothiophenol and dibenzamidodiphenyl disulfide.

Accelerators may be preferably but not necessarily used to control the time and/or temperature required for vulcanization and to improve the properties of the vulcanizate. In one embodiment, a single accelerator system may be used, i.e. primary accelerator. The primary accelerator(s) may be used in total amounts ranging from 0.5 phr to 4 phr, alternatively 0.8 phr to 1.5 phr. In another embodiment, combinations of a primary and a secondary accelerator might be used with the secondary accelerator being used in smaller amounts, such as from 0.05 phr to 3 phr, in order to activate and to improve the properties of the vulcanizate. Combinations of these accelerators might be expected to produce a synergistic effect on the final properties and are somewhat better than those produced by use of either accelerator alone. In addition, delayed action accelerators may be used which are not affected by normal processing temperatures but produce a satisfactory cure at ordinary vulcanization temperatures. Vulcanization retarders might also be used. Suitable types of accelerators that may be used in the present invention are for instance amines, disulfides, guanidines, thioureas, thiazoles, thiurams, sulfenamides, dithiocarbamates and xanthates. In one embodiment, the primary accelerator is a sulfenamide. If a second accelerator is used, the secondary accelerator may be for instance a guanidine, dithiocarbamate or thiuram compound. Suitable guanidines include dipheynylguanidine and the like. Suitable thiurams include tetramethylthiuram disulfide, tetraethylthiuram disulfide, and tetrabenzylthiuram disulfide.

The mixing of the elastomer composition can be accomplished by methods known to those having skill in the rubber mixing art. For example, the ingredients may be typically mixed in at least two stages, namely, at least one nonproductive stage followed by a productive mix stage. The final curatives including sulfur-vulcanizing agents may be typically mixed in the final stage which is conventionally called the "productive" mix stage in which the mixing typically occurs at a temperature, or ultimate temperature, lower than the mix temperature(s) of the preceding nonproductive mix stage(s). The terms "nonproductive" and "productive" mix stages are well known to those having skill in the rubber mixing art. In an embodiment, the elastomer composition may be subjected to a thermomechanical mixing step. The thermomechanical mixing step generally comprises a mechanical working in a mixer or extruder for a period of time, for example suitable to produce a rubber temperature which is within the range of 140°C to 190°C. The appropriate duration of the thermomechanical working varies as a function of the operating conditions, and the volume and nature of the components. For example, the thermomechanical working may be from 1 to 20 minutes.

The elastomer composition may be incorporated in a variety of rubber components, e.g., of a tire (or in other words tire components). For example, the rubber component may be a tread (including tread cap and tread base), sidewall, apex, chafer, sidewall insert, wirecoat or innerliner. Tread rubber applications are the preferred applications for the present invention.

In a second aspect of the present invention, a vulcanized elastomer composition is provided, which is based on the elastomer composition according to the first aspect of the present invention. In other words, the vulcanized elastomer composition is the vulcanization product of the sulfur vulcanizable elastomer composition according to the first aspect and/or its embodiments.

In a third aspect of the invention, a rubber component, preferably a rubber component for a tire, is provided, in particular comprising the elastomer composition in accordance with the first aspect of the invention, or in accordance with the second aspect of the invention, and/or one or more of their embodiments. Thus, the tire may be an uncured tire or cured tire, i.e. a vulcanized tire.

In a fourth aspect of the invention, a tire is provided comprising the rubber composition according to the first or second aspect of the invention, or having a rubber component according to the third aspect of the invention.

In a preferred embodiment, the tire comprises a tread, preferably a tread cap, comprising the elastomer composition. In another embodiment, the tire has a radially outer tread cap layer, intended to come into contact with the road when driving, comprising the elastomer composition.

The tire of the present invention may for example be a pneumatic tire or nonpneumatic tire, a race tire, a passenger tire, an aircraft tire, an agricultural tire, an earthmover tire, an off-the-road (OTR) tire, a truck tire or a motorcycle tire. The tire may also be a radial or bias tire.

Vulcanization of the pneumatic tire may for instance be carried out at conventional temperatures which is within the range of 100°C to 200°C. In one embodiment, the vulcanization is conducted at temperatures which are within the range of 110°C to 180°C. Any of the usual vulcanization processes may be used such as heating in a press or mold, heating with superheated steam or hot air. Such tires can be built, shaped, molded and cured by various methods which are known and will be readily apparent to those having skill in such art.

Moreover, in a fifth aspect, the present invention is directed to a method of making an elastomer composition (e.g., the elastomer composition as described in the aforementioned aspects), the method comprising one or more steps of:
i) Silanizing silica with at least one silane so as to obtain a silanized (or in other words pre-silanized) silica;
ii) Adding the silanized silica to a partially saturated elastomer and/or a diene based elastomer;
iii) Mixing the silanized silica and the partially saturated elastomer and/or a diene based elastomer;
iv) Adding one or more of plasticizers (such as resin and/or oil), processing aids, antidegradants, waxes;
v) Adding sulfur and optionally at least one (sulfur cure) accelerator.

In a sixth aspect, the present invention is directed to a method of manufacturing a tire, preferably with the composition according to an aforementioned aspect and/or made with the method of making the elastomer composition according to the fifth aspect, wherein the method of manufacturing the tire comprises:
a) forming at least a part of a rubber component (or a rubber component) with the vulcanizable elastomer composition;
b) assembling the tire, including the rubber component;
c) curing the tire having the rubber component to obtain a cured tire.

Multiple features of the aspects and embodiments mentioned herein may be combined with one another.

### Detailed Description of Preferred Embodiments of the Invention

Below Table 1 shows two Comparative elastomer compositions which are not in accordance with the present invention. Comparative Example 1 shows an elastomer composition which comprises the same diene-based rubber matrix as Comparative Example 2. Most ingredients of both compositions are the same. However, Comparative Example 1 comprises 80 phr of conventional silica together with 7 phr of Silane 1, whereas Comparative Example 2 has 90 phr of pre-silanized silica. Moreover, the Comparative Example 1 comprises 10 phr of oil, whereas Comparative Example 2 comprises 5 phr of oil. For example, these two Comparative Examples show that the use of pre-silanized silica instead of comparable amounts of conventional, i.e. non-pre-silanized silica, typically decreases the compound stiffness. This effect is shown herein below in Table 2.

**TABLE 1**

| | **Amounts in phr** | |
|---|---|---|
| **Ingredient** | **Comparative Example 1** | **Comparative Example 2** |
| SSBR¹ | 80 | 80 |
| PBD² | 20 | 20 |
| Plasticizing resin³ | 7 | 7 |
| Waxes | 1.5 | 1.5 |
| Oil⁴ | 10 | 5 |
| Processing aids⁵ | 3 | 3 |
| Stearic Acid | 3 | 3 |
| Silica⁶ | 80 | 0 |
| Pre-silanized silica⁷ | 0 | 90 |
| Silane 1⁸ | 7 | 0 |
| Zinc Oxide | 2.5 | 2.5 |
| Sulfur | 1.3 | 1.3 |
| Antidegradants⁹ | 3 | 3 |
| DPG¹⁰ | 2.9 | 0 |
| CBS¹¹ | 2.3 | 2.3 |
| Silane 2 on carbon black carrier¹² | 2 | 2 |

| | | |
|---|---|---|
| ¹ Solution polymerized styrene butadiene rubber as SLR4602 from Trinseo ² Polybutadiene rubber as Budene^{™} 1223 from Goodyear ³ Polyterpene resin as Sylvatraxx 4150 from Arizona Chemical ⁴ TDAE oil ⁵ including glycerine monoesters of stearic acid and zinc soaps of fatty acids ⁶ Precipitated silica as Zeosil^{™} Premium 200MP from Solvay ⁷ Pre-silanized, precipitated silica as Agilon^{™} 400 from PPG Industries ⁸ Bis-triethoxysilylpropyl disulfide as SI266^{™} from Evonik ⁹ based on phenylenediamines ¹⁰ Diphenylguanidine (accelerator) ¹¹ N-cyclohexyl-2-benzothiazolesulfenamide (accelerator) ¹² 50% bis-triethoxysilylpropyl tetrasulfide on 50% N330 carbon black carrier, as X50S from Evonik | | |

**TABLE 2**

| **Property** | **Comparative Example 1** | **Comparative Example 2** |
|---|---|---|
| G'(1%), 1 Hz [MPa] ^{a} | 2.2 | 1.5 |
| Tangent Delta (6%), 30°C ^{b} | 0.22 | 0.19 |
| Tensile Strength [MPa] ^{c} | 21 | 21 |

| | | |
|---|---|---|
| ^{a} G' has been obtained with an RPA 2000^{™} Rubber Process Analyzer of the company Alpha Technologies, based on ASTM D5289, at a strain of 1%, 100°C and a frequency of 1 Hz ^{b} Tangent Delta has been obtained by a Metravib^{™} instrument at 6% strain and 7.8 Hz based on DIN 53513, or equivalent, at a temperature of 30°C ^{c} Tensile strength has been determined by a ring sample test based on ASTM D412 or equivalent, tensile strength is stress at break | | |

It is observed that the stiffness of Comparative Example 2 is considerably smaller than the stiffness of Comparative Example 1 as shown by the about 32% drop in G'. That stiffness drop is even more remarkable as the composition of Comparative Example 2 has already an increased content of silica (by 10 phr), wherein more filler typically increases the stiffness of the composition. Even more, Comparative Example 2 has 5 phr less oil than Comparative Example 1 which typically also increases the compound stiffness. The pre-silanized silica disperses better in the elastomer composition which results in a reduced stiffness at low strain.

As also shown in Table 2, Tangent Delta is improved by the use of the pre-silanized silica by about 14%. Tangent Delta can be considered as a hysteresis indicator so that its reduction suggests also a reduced rolling resistance if the same elastomer composition is used in a tire. Tensile strength remains identical and relatively low for Comparative Example 1 and Comparative Example 2.

While the above-described improvement in Tangent Delta is desirable, the significant drop in stiffness may for instance be undesirable for many performance oriented tire applications.

In accordance with embodiments of the present invention, the inventors have found Inventive Examples 1 and 2 as shown in Table 3 below. Inventive Examples 1 and 2 are listed together with Comparative Examples 3 and 4 which are not in accordance with the present invention. All Examples of Table 3 comprise a partially saturated elastomer in the form of hydrogenated solution-polymerized styrene-butadiene rubbers. Moreover, Inventive Examples 1 and 2 comprise pre-silanized silica, whereas Comparative Examples 3 and 4 comprise conventional silica, similar to Comparative Examples 1 and 2. Comparative Example 3 and Inventive Example 1 comprise each a high-Tg hydrogenated solution-polymerized styrene-butadiene rubber. Comparative Example 4 and Inventive Example 2 comprise each a low-Tg hydrogenated solution-polymerized styrene-butadiene rubber.

**TABLE 3**

| | **Amounts in phr** | | | |
|---|---|---|---|---|
| **Ingredient** | **Comparative Example 3** | **Inventive Example 1** | **Comparative Example 4** | **Inventive Example 2** |
| Partially Saturated Elastomer 1¹³ | 100 | 100 | 0 | 0 |
| Partially Saturated Elastomer 2¹⁴ | 0 | 0 | 100 | 100 |
| Polyoctenamer¹⁵ | 5 | 5 | 5 | 5 |
| Waxes | 1.5 | 1.5 | 1.5 | 1.5 |
| Oil | 10 | 5 | 10 | 5 |
| Stearic Acid | 3 | 3 | 3 | 3 |
| Silica⁶ | 80 | 0 | 80 | 0 |
| Pre-silanized silica⁷ | 0 | 90 | 0 | 90 |
| Silane 1⁸ | 8 | 0 | 8 | 0 |
| Zinc Oxide | 2.5 | 2.5 | 2.5 | 2.5 |
| Sulfur | 1.1 | 1.1 | 1 | 0.9 |
| Antidegradants⁹ | 3 | 2.5 | 3 | 2.5 |
| DPG¹⁰ | 2.9 | 0 | 2.9 | 0 |
| CBS¹¹ | 2.5 | 2.5 | 2.5 | 2.3 |
| TBzTD¹⁶ | 0.5 | 0.5 | 0.4 | 0.3 |
| MBT¹⁷ | 0.2 | 0.2 | 0.2 | 0.2 |

| | | | | |
|---|---|---|---|---|
| ¹³ Hydrogenated solution-polymerized styrene-butadiene rubber having a Tg of -30°C, as NT120 from JSR ¹⁴ Hydrogenated solution-polymerized styrene-butadiene rubber having a Tg of -53°C, ¹⁵ as Vestenamer^{™} 8012 from Evonik ¹⁶ Tetrabenzylthiuram disulfide (accelerator) ¹⁷ 2-Mercaptobenzothiazole (accelerator) | | | | |

Stiffness, Tangent Delta and Tensile strength have been determined for the Examples of Table 3 and are listed in Table 4 below.

**TABLE 4**

| **Property** | **Comparative Example 3** | **Inventive Example 1** | **Comparative Example 4** | **Inventive Example 2** |
|---|---|---|---|---|
| G'(1%), 1Hz [MPa] ^{a} | 3.4 | 4.2 | 2.7 | 3.2 |
| Tangent Delta (6%), 30°C ^{b} | 0.19 | 0.15 | 0.17 | 0.13 |
| Tensile Strength [MPa] ^{c} | 32 | 31 | 28 | 27 |

| | | | | |
|---|---|---|---|---|
| ^{a} G' has been obtained with an RPA 2000^{™} Rubber Process Analyzer of the company Alpha Technologies, based on ASTM D5289, at a strain of 1%, 100 °C and a frequency of 1 Hz ^{b} Tangent Delta has been obtained by a Metravib^{™} instrument at 6% strain and 7.8 Hz based on DIN 53513, or equivalent, at a temperature of 30°C ^{c} Tensile strength has been determined by a ring sample test based on ASTM D412 or equivalent, tensile strength is stress at break | | | | |

As shown in Table 4, Inventive Example 1 has a substantially higher stiffness than its associated Comparative Example 3. This surprising and unexpected effect is completely different than what is observed for the combination of conventional diene-based rubbers with pre-silanized silica. Such a typical behavior has for example been demonstrated by Comparative Examples 1 and 2 in Table 2, in which the opposite effect of a stiffness drop occurs upon replacement of a conventional silica with pre-silanized silica. However, when using the pre-silanized silica in combination with partially saturated elastomers (here in the form of a hydrogenated solution-polymerized styrene-butadiene rubber), stiffness even increases when replacing the conventional silica by the pre-silanized silica. The same behavior can be observed when comparing the stiffness values of Comparative Example 4 and Inventive Example 2, as also shown in Table 4. Moreover, the respective Tangent Delta values as hysteresis / rolling resistance indicator improve significantly upon deployment of the pre-silanized silica versus the use of conventional silica. In addition, the Comparative Examples 3 and 4 as well as Inventive Examples 1 and 2 show good tensile strength.

Overall, the Inventive Examples 1 and 2 have an advanced stiffness, good rolling resistance indicators and at the same time good tensile properties.

## Claims

1. A sulfur vulcanizable elastomer composition comprising:
50 phr to 100 phr of at least one partially saturated elastomer comprising repeat units, wherein at most 15% of all repeat units of the partially saturated elastomer comprise a double bond;
0 phr to 50 phr of at least one diene based elastomer; and
40 phr to 200 phr of at least one filler, wherein the filler comprises predominantly silanized silica or pre-silanized silica.

2. The elastomer composition according to claim 1, wherein the partially saturated elastomer has a glass transition temperature within a range of from -20°C to -65°C.

3. The elastomer composition according to claim 1 or 2, wherein the partially saturated elastomer has a weight average molecular weight Mw of from 200,000 g/mol to 500,000 g/mol.

4. The elastomer composition according to at least one of the previous claims, wherein the elastomer composition comprises from 0 phr to 10 phr of liquid plasticizer or from 2 phr to 10 phr of liquid plasticizer.

5. The elastomer composition according to at least one of the previous claims, wherein the silanized or pre-silanized silica has a BET surface area smaller than 120 g/m².

6. The elastomer composition according to at least one of the previous claims, wherein the pre-silanized silica is a silica which is pre-reacted with a sulfur-containing silane; or wherein the silanized silica is a silica which is reacted with a sulfur-containing silane;

7. The elastomer composition according to claim 6, wherein the sulfur-containing silane comprises one or more of:
i) a bis(3-triethoxysilylpropyl)polysulfide containing an average of from 2 to 5 connecting sulfur atoms in its polysulfidic bridge; and
ii) an alkoxyorganomercaptosilane.

8. The elastomer composition according to at least one of the previous claims wherein said filler comprises from 45 phr to 150 phr of the said silica; and/or wherein said filler comprises less than 5 phr of carbon black.

9. The elastomer composition according to at least one of the previous claims, wherein at most 11% of all repeat units have a double bond and/or wherein at least 4% of the repeat units have a double bond.

10. The elastomer composition to at least one of the previous claims, wherein the partially saturated elastomer comprises repeat units formed by residues of monomers selected from one or more of ethylene, propylene, butadiene, isoprene, and styrene; and/or wherein the partially saturated elastomer is a hydrogenated styrene butadiene rubber.

11. The elastomer composition according to at least one of the previous claims, further comprising from 3 phr to 20 phr of a polyoctenamer, the polyoctenamer preferably having one or more of the following features:
(i) a glass transition temperature within a range of -50°C to -80°C;
(ii) a weight average molecular weight Mw within a range of 80,000 g/mol to 100,000 g/mol, as determined by GPC;
(iii) a melting point within a range of 45°C to 55°C, as measured by DSC in a second heating; and
(iv) between 65% and 85% of trans double bonds.

12. The elastomer composition according to at least one of the previous claims, comprising
75 phr to 100 phr of the partially saturated elastomer, and
0 phr to 25 phr, alternatively 5 to 25 phr, of one or more of polybutadiene rubber, polyisoprene, and natural rubber.

13. The elastomer composition according to at least one of the previous claims, wherein the partially saturated elastomer is a solution-polymerized styrene butadiene rubber having one or more of th following features:
(i) less than 5% of nonhydrogenated vinyl groups, based on the total number of vinyl groups of the hydrogenated styrene butadiene rubber;
(ii) less than 20% of nonhydrogenated double bonds in cis-1,4 and trans-1,4 butadiene repeat units, based on the total number of cis-1,4 and trans-1,4 butadiene repeat units;
(iii) from 80% to 99% of hydrogenated double bonds;
(iv) a bound styrene content ranging from 5% to 40% and a butadiene content ranging from 50% to 95%, by weight.

14. The elastomer composition according to at least one of the previous claims, further comprising 0.1 phr to 3 phr of a vulcanization accelerator selected from one or more of dithiocarbamate accelerators and thiuram accelerators.

15. A tire having a rubber component, preferably a tread, comprising the elastomer composition according to at least one of the previous claims, wherein the elastomer composition is vulcanized.

## Patentansprüche

1. Mit Schwefel vulkanisierbare Elastomerzusammensetzung, die umfasst:
50 ThK bis 100 ThK mindestens eines teilweise gesättigten Elastomers, das wiederkehrende Einheiten umfasst; wobei höchstens 15% der gesamten wiederkehrenden Einheiten des teilweise gesättigten Elastomers eine Doppelbindung umfassen;
0 ThK bis 50 ThK mindestens eines Elastomers auf Dienbasis; und
40 ThK bis 200 ThK mindestens eines Füllstoffs; wobei der Füllstoff überwiegend silanisiertes Siliciumdioxid oder vorsilanisiertes Siliciumdioxid umfasst.

2. Elastomerzusammensetzung nach Anspruch 1, wobei das Elastomer, das eine partielle Sättigung besitzt, eine Glasübergangstemperatur aufweist, die in dem Bereich von -20 °C bis -65 °C liegt.

3. Elastomerzusammensetzung nach Anspruch 1 oder 2, wobei das Elastomer, das eine partielle Sättigung besitzt, ein gewichtsmittleres Molekulargewicht Mw von 200.000 g/mol bis 500.000 g/mol aufweist.

4. Elastomerzusammensetzung nach mindestens einem der vorhergehenden Ansprüche, wobei die Elastomerzusammensetzung von 0 ThK bis 10 ThK eines flüssigen Weichmachers oder von 2 ThK bis 10 ThK eines flüssigen Weichmachers umfasst.

5. Elastomerzusammensetzung nach mindestens einem der vorhergehenden Ansprüche, wobei das silanisierte Siliciumdioxid oder das vorsilanisierte Siliciumdioxid eine BET-Oberfläche aufweist, die weniger als 120 g/m² beträgt.

6. Elastomerzusammensetzung nach mindestens einem der vorhergehenden Ansprüche, wobei das vorsilanisierte Siliciumdioxid ein Siliciumdioxid darstellt, das zuvor mit einem schwefelhaltigen Silan umgesetzt wurde; oder wobei das silanisierte Siliciumdioxid ein Siliciumdioxid darstellt, das mit einem schwefelhaltigen Silan umgesetzt wurde.

7. Elastomerzusammensetzung nach Anspruch 6, wobei das schwefelhaltige Silan ein oder mehrere Elemente umfasst, die ausgewählt sind aus:
i) einem Bis(3-triethoxysilylpropyl)polysulfid, das durchschnittlich von 2 bis 5 verbindende Schwefelatome in seiner Polysulfidbrücke enthält; und
ii) ein Alkoxyorganomercaptosilan.

8. Elastomerzusammensetzung nach mindestens einem der vorhergehenden Ansprüche, wobei das oben genannte Füllmaterial 45 ThK bis 150 ThK des Siliciumdioxids umfasst; und/oder wobei das oben genannte Füllmaterial weniger als 5 ThK Ruß umfasst.

9. Elastomerzusammensetzung nach mindestens einem der vorhergehenden Ansprüche, wobei mindestens 11 % der gesamten wiederkehrenden Einheiten eine Doppelbindung aufweisen und/oder wobei mindestens 4 % der wiederkehrenden Einheiten eine Doppelbindung aufweisen.

10. Elastomerzusammensetzung nach mindestens einem der vorhergehenden Ansprüche, wobei das Elastomer, das eine partielle Sättigung besitzt, wiederkehrende Einheiten umfasst, die durch Monomerreste gebildet werden, die aus einem oder mehreren Monomeren ausgewählt sind, nämlich Ethylen, Propylen, Butadien, Isopren und Styrol; und/oder wobei das Elastomer, das eine partielle Sättigung besitzt, einen Styrol-Butadien-Kautschuk darstellt, der hydriert worden ist.

11. Elastomerzusammensetzung nach mindestens einem der vorhergehenden Ansprüche, die weiterhin von 3 ThK bis 20 ThK eines Polyoctenamers umfasst, wobei das Polyoctenamer vorzugsweise eine oder mehrere der folgenden Eigenschaften besitzt, nämlich:
(i) eine Glasübergangstemperatur, die in dem Bereich von -50 °C bis -80 °C liegt;
(ii) ein gewichtsmittleres Molekulargewicht Mw, das in dem Bereich von 80.000 g/mol bis 100.000 g/mol, wie es durch Gelpermeationschromatographie bestimmt wird;
(iii) einem Schmelzpunkt, der in dem Bereich von 45 °C bis 55 °C liegt, wie er, bei einer zweiten Erhitzung, mit Hilfe der Differentialabtastkalorimetrie bestimmt wird; und
(iv) zwischen 65 % und 85 % Doppelbindungen, die eine trans-Konfiguration besitzen.

12. Elastomerzusammensetzung nach mindestens einem der vorhergehenden Ansprüche, die weiterhin von 75 ThK bis 100 ThK des Elastomers, das eine partielle Sättigung besitzt, und von 0 ThK bis 25 ThK, alternativ von 5 ThK bis 25 ThK eines oder mehrerer Kautschuke, ausgewählt aus Polybutadienkautschuk, Polyisoprenkautschuk und Naturkautschuk, umfasst.

13. Elastomerzusammensetzung nach mindestens einem der vorhergehenden Ansprüche, wobei das Elastomer, das eine partielle Sättigung besitzt, einen Styrol-Butadien-Kautschuk darstellt, der in Lösung polymerisiert wurde und eine oder mehrere der folgenden Eigenschaften besitzt, nämlich:
(i) weniger als 5 % nicht hydrierte Vinylgruppen, bezogen auf die Gesamtzahl der Vinylgruppen des Styrol-Butadien-Kautschuks, der hydriert wurde;
(ii) weniger als 20 % nicht hydrierte Doppelbindungen in den wiederkehrenden Einheiten von dem cis-1,4- und trans-1,4-Butadien, bezogen auf die Gesamtzahl der wiederkehrenden Einheiten von dem cis-1,4- und trans-1,4-Butadien;
(iii) 80 % bis 99 % hydrierte Doppelbindungen;
(iv) einen Gehalt an gebundenem Styrol im Bereich von 5 % bis 40 % und einen Gehalt an Butadien im Bereich von 50 % bis 95 %, jeweils bezogen auf das Gewicht.

14. Elastomerzusammensetzung nach mindestens einem der vorhergehenden Ansprüche, die weiterhin 0,1 ThK bis 3 ThK eines Vulkanisationsbeschleunigers umfasst, der aus einem oder mehreren Beschleunigern ausgewählt ist, die Beschleuniger auf Dithiocarbamatbasis und Beschleuniger auf Thiurambasis umfassen.

15. Luftreifen, der einen Kautschukgehalt besitzt, vorzugsweise eine Lauffläche, die die Elastomerzusammensetzung gemäß mindestens einem der vorhergehenden Ansprüche umfasst; wobei die Elastomerzusammensetzung vulkanisiert ist.

## Revendications

1. Composition d'élastomère vulcanisable au soufre, qui comprend :
de 50 phr à 100 phr d'au moins un élastomère possédant une saturation partielle, qui comprend des unités de répétition ; dans laquelle au maximum 15 % de la totalité des unités de répétition de l'élastomère possédant une saturation partielle comprennent une liaison double ;
de 0 phr à 50 phr d'au moins un élastomère à base diénique ; et
de 40 phr à 200 phr d'au moins une matière de charge ; dans laquelle la matière de charge comprend, de manière prédominante, de la silice silanisée ou de la silice présilanisée.

2. Composition d'élastomère selon la revendication 1, dans laquelle l'élastomère possédant une saturation partielle possède une température de transition vitreuse qui se situe dans une plage allant de -20 °C à -65 °C.

3. Composition d'élastomère selon la revendication 1 ou 2, dans laquelle l'élastomère possédant une saturation partielle possède un poids moléculaire moyen en poids Mw de 200.000 g/mol à 500.000 g/mol.

4. Composition d'élastomère selon au moins une des revendications précédentes, dans laquelle la composition d'élastomère comprend de 0 phr à 10 phr d'un plastifiant liquide ou de 2 phr à 10 phr d'un plastifiant liquide.

5. Composition d'élastomère selon au moins une des revendications précédentes, dans laquelle la silice silanisée ou la silice présilanisée possède une aire de surface BET qui est inférieure à 120 g/m².

6. Composition d'élastomère selon au moins une des revendications précédentes, dans laquelle la silice présilanisée représente une silice que l'on a fait réagir préalablement avec un silane contenant du soufre ; ou dans laquelle la silice silanisée représente une silice que l'on a fait réagir avec un silane contenant du soufre.

7. Composition d'élastomère selon la revendication 6, dans laquelle le silane contenant du soufre comprend un ou plusieurs éléments qui sont choisis parmi :
i) un bis (3-triéthoxysilylpropyl) polysulfure qui contient une moyenne de 2 à 5 atomes de soufre de liaison dans son pont polysulfure ; et
ii) un alcoxyorganomercaptosilane.

8. Composition d'élastomère selon au moins une des revendications précédentes, dans laquelle ladite matière de charge comprend de 45 phr à 150 phr de ladite silice ; et/ou dans laquelle ladite matière de charge comprend moins de 5 phr de noir de carbone.

9. Composition d'élastomère selon au moins une des revendications précédentes, dans laquelle au maximum 11 % de la totalité des unités de répétition possèdent une liaison double et/ou dans laquelle au moins 4 % des unités de répétition possèdent une liaison double.

10. Composition d'élastomère selon au moins une des revendications précédentes, dans laquelle l'élastomère possédant une saturation partielle comprend des unités de répétition formées par des résidus le monomères qui sont choisis parmi un ou plusieurs monomères, à savoir de l'éthylène, du propylène, du butadiène, de l'isoprène et du styrène ; et/ou dans laquelle l'élastomère possédant une saturation partielle représente un caoutchouc de styrène butadiène qui a été hydrogéné.

11. Composition d'élastomère selon au moins une des revendications précédentes, qui comprend en outre de 3 phr à 20 phr d'un polyocténamère, le polyocténamère possédant de préférence une ou plusieurs des caractéristiques suivantes, à savoir :
(i) une température de transition vitreuse qui se situe dans une plage allant de -50 °C à -80 °C ;
(ii) un poids moléculaire moyen en poids Mw qui se situe dans une plage allant de 80.000 g/mol à 100.000 g/mol, tel qu'on le détermine par l'intermédiaire d'une chromatographie par perméation sur gel ;
(iii) un point de fusion qui se situe dans une plage allant de 45 °C à 55 °C, tel qu'on le mesure par l'intermédiaire d'une calorimétrique différentielle à balayage, lors d'un deuxième chauffage ; et
(iv) entre 65 % et 85 % de liaisons doubles possédant une configuration trans.

12. Composition d'élastomère selon au moins une des revendications précédentes, qui comprend en outre de 75 phr à 100 phr de l'élastomère possédant une saturation partielle, et de 0 phr à 25 phr, en variante de 5 phr à 25 phr d'un ou de plusieurs caoutchoucs choisis parmi un caoutchouc de polybutadiène, un caoutchouc de polyisoprène et du caoutchouc naturel.

13. Composition d'élastomère selon au moins une des revendications précédentes, dans laquelle l'élastomère possédant une saturation partielle représente un caoutchouc de styrène butadiène qui a été polymérisé en solution et qui possède une ou plusieurs des caractéristiques suivantes, à savoir :
(i) moins de 5 % de groupes vinyle non hydrogénés, lorsqu'on se base sur le nombre total de groupes vinyle du caoutchouc de styrène butadiène qui a été hydrogéné ;
(ii) moins de 20 % de liaisons doubles non hydrogénées dans les unités de répétition du cis-1,4- et de trans-1,4-butadiène, lorsqu'on se base sur le nombre total des unités de répétition du cis-1,4- et de trans-1,4-butadiène ;
(iii) de 80 % à 99 % de liaisons doubles hydrogénées ;
(iv) une teneur en styrène lié qui se situe dans une plage allant de 5 % à 40 % et une teneur en butadiène qui se situe dans une plage allant de 50 % à 95 %, en poids.

14. Composition d'élastomère selon au moins une des revendications précédentes, qui comprend en outre de 0,1 phr à 3 phr d'un accélérateur de la vulcanisation qui est choisi parmi un ou plusieurs accélérateurs comprenant des accélérateurs à base de dithiocarbamate et des accélérateurs à base de thiurame.

15. Bandage pneumatique qui possède une teneur en caoutchouc, de préférence bande de roulement, qui comprend la composition d'élastomère en conformité avec au moins une des revendications précédentes ; dans lequel la composition d'élastomère est vulcanisée.
